(19) Europäisches Patentamt
European Patent Office
Office européen des brevets

(11) **EP 4 312 072 A1**

(12) **EUROPEAN PATENT APPLICATION**

(43) Date of publication:
**31.01.2024 Bulletin 2024/05**

(21) Application number: **22275103.4**

(22) Date of filing: **27.07.2022**

(51) International Patent Classification (IPC):
**G02B 27/01** *(2006.01)*

(52) Cooperative Patent Classification (CPC):
**G02B 27/0172;** G02B 2027/0112; G02B 2027/012

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **BAE SYSTEMS plc**
**London SW1Y 5AD (GB)**

(72) Inventor: **The designation of the inventor has not
yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **A COATING FOR OPTICAL SURFACES**

(57)     A coating for an optical surface for reducing secondary reflections from narrow wavelength band image sources, the coating comprising multiple notch filters located at different predetermined wavelength regions

FIG. 2

**Description**

FIELD

The present invention relates to a coating for optical surfaces, preferably but not exclusively for a helmet visor or the like.

BACKGROUND

There are many situations in which a user may wear a helmet. For example, a pilot of a plane, a motorbike rider and many other places which may present a hazard to the user. An integral part of the helmet is a visor which provides a view on the surroundings. In some cases, the visor may further provide an augmented or virtual component which allows the user to see other types of information or data.

A problem which exists with visors is that it is notoriously difficult to deposit a good anti-reflective coating on the outside of a visor as might be used in a visor projected display. The visor is typically made from a polycarbonate which is usually hard coated to reduce scratching. The hard coating tends to optically interfere with the performance of any anti-reflection coating deposited on the hard coating, making the anti-reflection coating inefficient and often limiting its performance to no better than 1%. The resultant optical effect is the introduction of secondary reflections from the outside of the visor which can be objectionable and potentially dangerous in visually critical contexts.

in a known visor an incident beam passes from display optics towards the visor. The incident beam is reflected by an inner coating towards the user making an intended primary image. The incident beam is also transmitted through the visor and then reflected by an outer coating of the visor towards the eye. The beam is then transmitted back through the inner coating giving secondary reflection . The nature of the secondary reflection is dependent on many variables but is undesirable.

As a result, there is a need for an improved anti-reflective coating which overcomes at least some of the problems of current visors.

A further object is to implement a visor having a coating in which the secondaries are mitigated or removed.

SUMMARY

According to an aspect of the present invention, there is provided a coating for an optical surface for reducing secondary reflections from narrow wavelength band image sources, the coating comprising multiple notch filters located at different predetermined wavelength regions.

In an aspect the multiple notch filters comprise three notch filters.

In an aspect the different predetermined wavelength regions comprise red, green and blue wavelength regions.

In an aspect a first notch includes a full-width-half-max of about 50nm, and a peak reflectivity of about 80%.

In an aspect a second notch includes a full-width-half-max of about 50nm, and a peak reflectivity of about 70%.

In an aspect a third notch has a full-width-half-max of about 50nm, and a peak reflectivity of about 65%.

In an aspect a centre of a first notch is approximately 440nm.

In an aspect a centre of a second notch is approximately 520nm.

In an aspect a centre of a third notch is approximately 630nm.

In an aspect the coating further comprises a first dielectric coating under the multiple notch filters.

In an aspect the coating further comprises a second dielectric coating over the multiple notch filters.

In an aspect the second dielectric coating comprises a dip-hard coating,

According to an aspect of the present invention, there is provided a visor having a coating according to another aspect.

In an aspect the visor is made from a polycarbonate material

In an aspect the coating is located on an inner surface of the visor.

In an aspect a further anti-reflective coating is located on an outer surface of the visor.

According to an aspect of the present invention, there is provided a helmet including a visor according to another aspect

According to an aspect of the present invention, there is provided a method of applying a coating, that reduces secondary reflection from narrow wavelength band images sources to an optical surface, the method comprises applying multiple layers of material each having a notch filter located at different predetermined wavelength regions.

In an aspect the method comprises applying three layers of material to form respective notches.

In an aspect further comprising applying the multiple layers in the red, green and blue wavelength regions .

In an aspect further comprising forming a first notch includes a full-width-half-max of about 50nm, and a peak reflectivity of about 80%.

In an aspect further comprising forming a second notch includes a full-width-half-max of about 50nm, and a peak reflectivity of about 70%.

In an aspect further comprising forming a third notch has a full-width-half-max of about 50nm, and a peak reflectivity of about 65%.

In an aspect further comprising forming a centre of a first notch at approximately 440nm; a centre of a second notch at approximately 520nm and a centre of a third notch at approximately 630nm.

According to an aspect of the present invention, there is provided a method of forming a visor comprising applying a coating made by the method according to another aspect to a polycarbonate visor.

BRIEF DESCRIPTION OF THE FIGURES

Embodiments of the invention will now be described by way of example only with reference to the figures, in which:

Figure 1 shows a simplified diagram of a helmet including a visor according to the present invention;
Figure 2 is a simplified view of the visor of figure 1;
Figure 3 is a representation of a spectral profile of a coating for a visor according to the present invention;
Figure 4 is a graph representing the optical properties achieved using the visor of the present invention.
Figure 5 is a flow diagram showing how an anti-reflective coating is produced;

DETAILED DESCRIPTION

The present invention relates to a visor having an anti-reflective coating which both reduces secondary reflections and further augments the brightness of the image produced by the visor.

The secondary reflections are reduced by making the reflection of the image from the inside of the visor stronger. This gives rise to a visor in which the main image is brighter and less light hits the outer surface so less is reflected back. An issue with this is that if the inside surface has a spectrally broad reflective coating, then in making this more reflective there will be a reduction of light from the outside world transmission. The present invention is to use spectrally narrow band image sources for each of red, green and blue (RGB) wavelengths and to provide a narrow notch filter in the reflection coating on the visor so as to efficiently reflect the RGB image and wide enough to maintain an optimal outside world transmission.

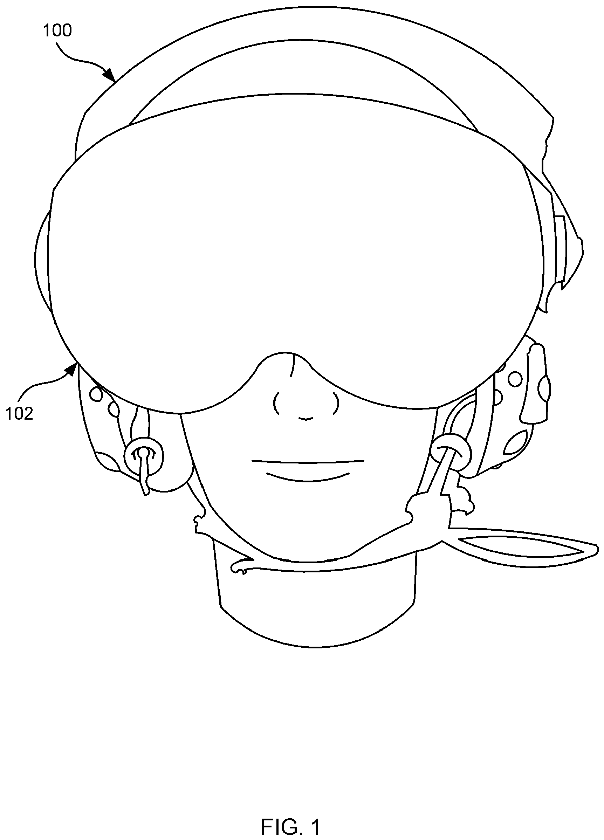

Figure 1 illustrates a helmet 200 including a visor 202. The helmet is suitable for being worn on the head of a user (not shown). In use, the user wears the helmet for head protection and uses the visor to see a real image of the outside world and augmented or virtual images from an imaging system (not shown). The imaging system is able to combine the real world images and the augmented or virtual images.

A typical user is a pilot of a vehicle such as an aircraft or any user who needs head protection using an imaging system.

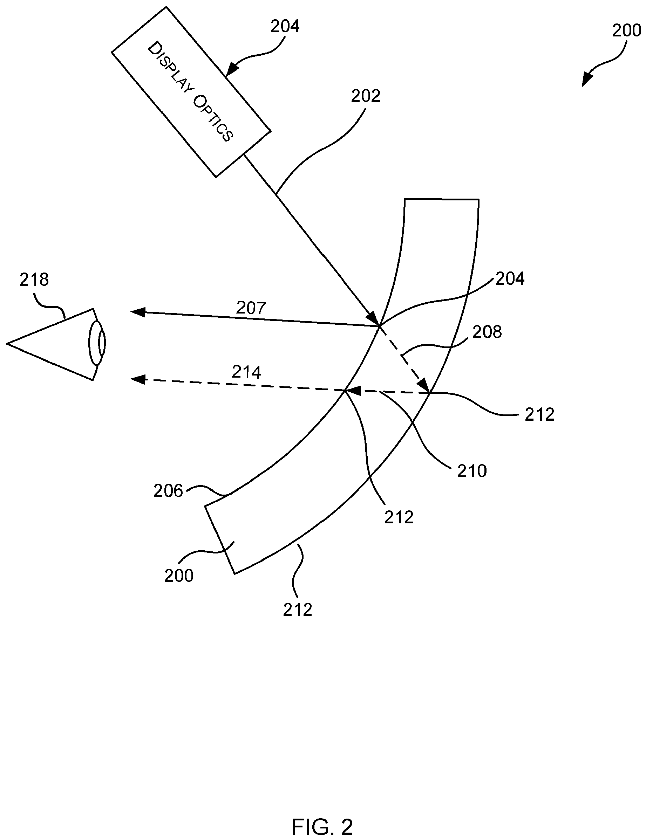

Figure 2 is a schematic diagram of the visor 200. The visor 200 is a curved element which is supported on the helmet (not shown). The visor comprises a polycarbonate visor and includes an inner coating 206 and outer coating 214. The visor 2000 provides images to a user 218 represented as an eye and provides an image of the real world 216 and images from a display optic 204 of the imaging system.

The display optics produces an incident beam 202 is reflected 204 by an inner coating 206 towards the user making the intended primary image 207 ,and is also transmitted 208 through the visor 200. The transmitted beam 208 is then reflected 210 by an outer coating 212 towards the eye. The beam 210 is then transmitted back through the inner coating 206 giving the undesired secondary reflection 114.

The display optics 204 provide a virtual image such as symbology which is generated from one or more sensors in the real world 216 or associated with the situation in which the visor is in use. The term symbology is used to describe all types of augmented or virtual imagery which is associated with the needs of a user wearing the visor. The sensors may include sensors for: visible and non-visible wavelengths; temperature; location; position; velocity; acceleration and any other sensor appropriate to the situation.

The inner coating 206 has a reflectivity $R_D$ and a transmission coefficient $T_D$. The outer coating 212 has a reflectivity $R_{AR}$. The polycarbonate visor 200 has a transmission coefficient of $T_{poly}$. The strength of the primary image 207 is proportional to $R_D$ ($\propto R_D$). The strength of the secondary reflection 214 is proportional to $T_D^2$ and proportional to $T_{poly}^2$ and $R_{AR}$ ($\propto T_D^2 . T_{poly}^2 . R_{AR}$). Look at the strength of the secondary reflection 214 relative to the primary then:

$$\text{Relative strength of the secondary reflection} = T_D^2 . T_{poly}^2 . R_{AR} / R_D$$

By maximising transmissivity of light from the real world $T_{poly} \sim 1$ the relative strength of the secondary reflection becomes:

$$\text{Relative strength of the secondary reflection} = T_D^2 . R_{AR}/ R_D$$

Assuming that the inner coating 206 is of reasonable quality, then for any wavelength in the visible $(T_D+R_D) \sim 1$ increasing the reflectivity of the inner coating for the source wavelengths will also reduce the transmission coefficient of the inner coating.

An understanding of these observations has led to the following solution to reduce secondary reflections and maximise transmissivity of light from the real world in visors.

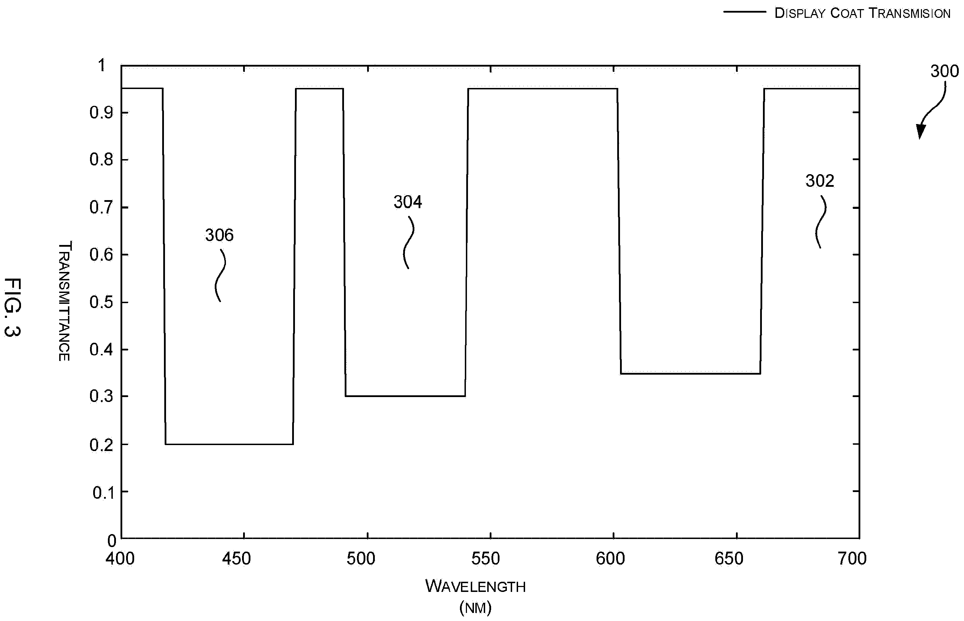

Figure 3 shows a schematic view of an anti-reflective coating 300 having three notches 302, 304, and 306 centred on respective RGB wavelengths. The coating is applied to an optical surface (not shown) of a visor or any other appropriate optical surface. The reflectivity of the notches is dependent on a number of variables including notch bandwidth; reflectivity of notches and reflectivity between notches. In addition, the notches have further variables such as size, depth, spacing, etc. The figure shows three notches in three specific locations. It will be appreciated that there may be a different number of notches being located at different specific locations.

By reflecting the RGB off the inside surface 306, the amount of light reaching the outer surface 308 is reduced which reduces the amount of light reflected by the anti-reflection coating on outer surface 308 so reducing the strength of this reflection compared to the primary image off the inside surface. Typical values according to the present invention includes the following possible variables:

- Reflectivity of notch for each of RGB

    ○ 65% (Red)
    ○ 70% (Green)
    ○ 80% (Blue)

- Reflectivity between notches
    ○ 5%

- Relative Luminance

    ○ 193% baseline (Red)
    ○ 175% baseline (Green)
    ○ 183% baseline (Blue)

- Coating effective index
    ○ n* = 2.0

This set of variable used as one example gives the following performance attributes.

- Secondary Reflection (0.5% AR)
- 0.153% (Red), 0.215% (Green), 0.186% (Blue)
- Outside World Transmission 66%
- P53 Transmission 93%
- Outside World Colouration < 0.042 units in CIE 1976 colour space (u', V).

In use the visor enables the presentation to the user of a combination of an augmented or virtual reality image which include real world images and virtual images. The virtual images include symbology as described above and the real world includes images of an external scene and/or details of the user location, for example a cockpit.

It should be noted that the visor is one element that can be coated as described. The coatings could be applied to other optical devices including a head mounted or worn device (HMD, HWD), a heads up device (HUD) or any other imaging system where the problem of undesirable secondary reflections occur.

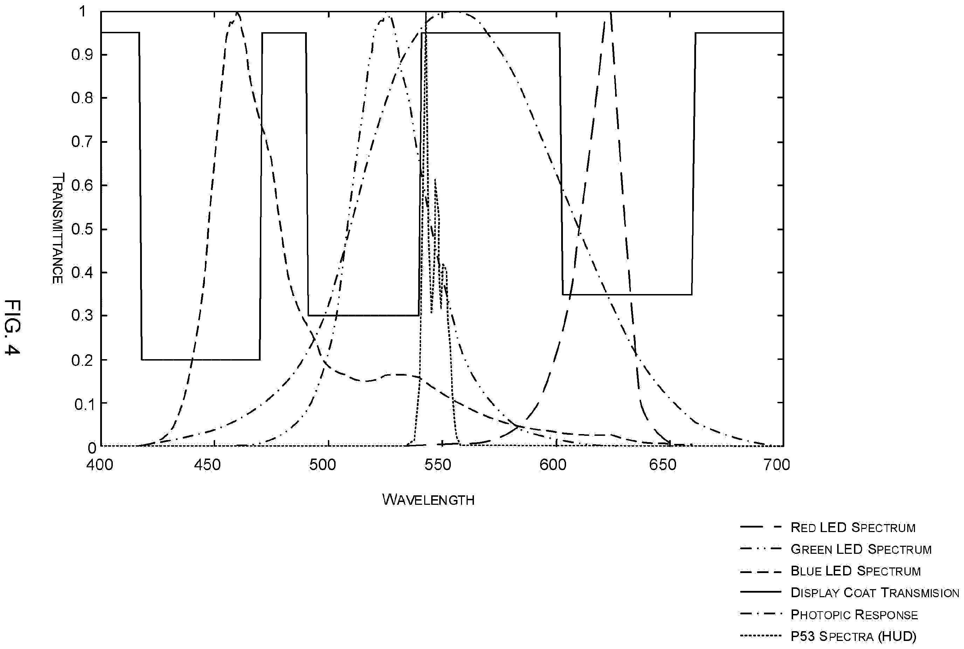

Figure 4 shows the optical spectrum and filtered spectrum of RGB when impinging on the coating of the present invention. From this and the performance attributes above it is clear to see that the coatings applied to the visor have minimal secondary reflections and that artefacts relating to this will not be viewed by a user. The amount of light entering the visor from the outside world is higher than traditional visors. In addition, the photopic response of the coating ensures a strong transmittance and luminosity when compared to traditional visors.

It will be appreciated that the specific variables and results may not be exactly as indicated but can include many alternatives.

An additional advantage of the visor coating is that the design can be optimised so as to maintain or improve on the outside world contrast of a classic P53 or P43 phosphor based heads up display viewed through the visor. Generally the wavelength of the green LED light source is as shown in figure 4. The majority of its spectral output is below the spectra of the P53 head up display also shown in figure 4. The green notch reflective part of the combiner coating can be designed so as to maximise the transmission of the P53 spectrum whilst still reflecting the majority of the green LED spectrum. If the typical values for the transmission of P53 spectrum through the visor coating given above (93%) compared to the outside world transmission also given above (66%) then as 93%>66% the P53 HUD symbology contrast against the outside world has been improved when looking through the visor. To further improve this technique, the now unused upper wavelength part of the green LED spectra would ideally be filtered out in the HMD display optics prior to it ever reaching the visor so as to prevent it from contributing to the secondary image.

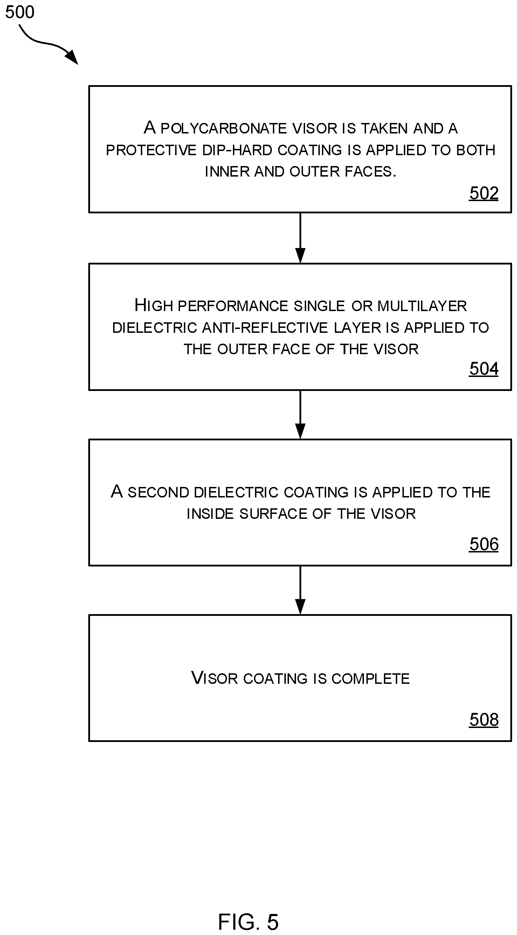

In order to apply the anti-reflective coating of the present invention the process 500 is implemented as described with reference to figure 5.

In a first step 502 a hard coated polycarbonate visor is taken and a protective dip-hard coating is applied to both inner and outer faces. This helps protect the visor from scratches and helps provide a better base for the dielectric coatings added on top. A high performance single or multilayer dielectric anti-reflective layer is applied to the outer face of the visor 504. The layers are designed and made using any appropriate process. The anti-reflective coating may be a single layer or a higher performance multilayer coating.

In a second step 504 a dielectric coating is applied to the outside surface of the visor using an appropriate process forming an anti-reflection coating.

In a third step 506 a second coating is designed which consists of several dielectric material layers to be applied to the inner surface of the visor and includes three different notch filters. For an RGB display a first notch is located in the blue wavelength region, a second notch is located in the green wavelength region and a third notch is located in the red wavelength region. The design takes into account the wavelength of the image source, the range of angles over which the coating needs to perform as well as optimising the overall performance considering reflection efficiency and outside world transmission.

It should be noted that the second coating can include one or more notches. A single notch could be used in situations where a single wavelength is required to be viewed and two notches for two wavelengths. Three notches are shown for RGB but for different wavelengths further notches could be included.

The first notch includes a full-width-half-max of approximately 50nm, and a peak reflectivity of approximately 80%, the second notch includes a full-width-half-max of approximately 50nm, and a peak reflectivity of approximately 70%, and the third notch has a full-width-half-max of approximately 50nm, and a peak reflectivity of approximately 65%. The values above are by way of example. The wavelength of the notch will be dependent on the spectrum of the source and the range of angles of incidence that the coating needs to operate over and the measurement angle, and include a centre of the first notch of approximately 440nm, a centre of the second notch of approximately 520nm, and a centre of the third notch of approximately 630nm, by way of example.

The visor coating is then complete 508.

The present invention relates to a visor, but it will be understood that the coating may be applied to different surfaces such as for example an eyepiece assembly with similar secondary image issues, optical devices including a head mounted or worn device (HMD, HWD), a heads up device (HUD) or any other imaging system where the problem of undesirable secondary reflections occur. The wavelength ranges discussed herein are examples. Other visors or surfaces could be configured for different wavelength regions, in which case the notches would be centred at different wavelengths, from ultra-violet to infra-red.

In use the visor with the coating may be used as part of an imaging system 600 as shown in figure 6. The imaging system 600 is able to present a user (the eye 602 of which is shown) with optical information. Take the example of an aircraft and a pilot, the optical system provides to the user real world and virtual information via visor 202. The real world image 604 includes the external scene outside the aircraft and an view of the cockpit based information from sensors S1, S2, S3, S4. In addition, display optics 204 provide virtual image 606 based on information from sensors S1, S2, S3, S4 or the like associated with the aircraft or surroundings. The virtual image comprises symbology which is used the assist the user to pilot the aircraft safely. The coating on the visor as described optimises the transmission of symbology as there are less secondary reflection issues.

It should further be noted that the ability to provides different numbers of notches and wavelength ranges will further optimise the transmission of symbology as it can be tuned to different situations. The helmet may have different visors for different situations.

Although the present invention has been described in connection with some aspects, it is not intended to be limited to the specific form set forth herein. Rather, the scope of the present invention is limited only by the accompanying claims. Additionally, although a feature may appear to be described in connection with particular aspects, one skilled in the art would recognize that various features of the described aspects may be combined in accordance with the invention. In the claims, the term 'comprising' does not exclude the presence of other elements or steps.

Furthermore, although individually listed, a plurality of means, elements or method steps may be implemented by, for example, a single unit or step. Additionally, although individual features may be included in different claims, these may possibly be advantageously combined, and the inclusion in different claims does not imply that a combination of features is not feasible and/or advantageous. Also, the inclusion of a feature in one category of claims does not imply a limitation to this category, but rather indicates that the feature is equally applicable to other claim categories, as appropriate.

**Claims**

1.  A coating (400) for an optical surface for reducing secondary reflections from narrow wavelength band image sources, the coating comprising multiple notch filters (402, 404, 406) located at different predetermined wavelength regions.

2.  The coating according to claim 1, wherein the multiple notch filters comprise three notch filters.

3.  The coating according to claim 1 or claim 2, wherein the different predetermined wavelength regions comprise red, green and blue wavelength regions.

4.  The coating according to any one of the preceding claims, wherein a first notch includes a full-width-half-max of about 50nm, and a peak reflectivity of about 80%.

5.  The coating according to any one of the preceding claims, wherein a second notch includes a full-width-half-max of about 50nm, and a peak reflectivity of about 70%.

6.  The coating according to any one of the preceding claims, wherein a third notch has a full-width-half-max of about 50nm, and a peak reflectivity of about 65%.

7.  The coating according to any one of the preceding claims, wherein a centre of a first notch is approximately 440nm; a centre of a second notch is approximately 520nm and a centre of a third notch is approximately 630nm.

8.  The coating according to any one of the preceding claims, wherein the coating further comprises a first dielectric coating under the multiple notch filters and a second dielectric coating over the multiple notch filters.

9.  A visor (202) having a coating (400) according to any preceding claim.

10. The visor according to claims 9, wherein the visor is made from a polycarbonate material

11. The visor according to claim 9 or claim 10, wherein the coating is located on an inner surface of the visor.

12. A helmet (200) including a visor (202) according to any one of claims 9 to 11.

13. A method (600) of applying a coating, that reduces secondary reflection from narrow wavelength band images sources to an optical surface, the method comprises applying multiple layers of material (604) each having a notch filter (402, 404, 406) located at different predetermined wavelength regions.

14. The method according to claim 13, wherein the method comprises applying three layers of material to form respective notches in the red, green and blue wavelength regions .

15. A method (600) of forming a visor (202) comprising applying a coating (400) made by the method according to any one of claims 13 to 14 to a polycarbonate visor.

FIG. 1

FIG. 2

FIG. 3

FIG. 4

500

A POLYCARBONATE VISOR IS TAKEN AND A PROTECTIVE DIP-HARD COATING IS APPLIED TO BOTH INNER AND OUTER FACES.

502

HIGH PERFORMANCE SINGLE OR MULTILAYER DIELECTRIC ANTI-REFLECTIVE LAYER IS APPLIED TO THE OUTER FACE OF THE VISOR

504

A SECOND DIELECTRIC COATING IS APPLIED TO THE INSIDE SURFACE OF THE VISOR

506

VISOR COATING IS COMPLETE

508

FIG. 5

Europäisches
Patentamt
European
Patent Office
Office européen
des brevets

# EUROPEAN SEARCH REPORT

Application Number

EP 22 27 5103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/329139 A1 (SHEARMAN RYAN T [US] ET AL) 16 November 2017 (2017-11-16) * paragraphs [0013], [0022], [0037], [0051]; figures 2A, 2B, 4 * ----- | 1-15 | INV. G02B27/01 |
| X | US 2016/377868 A1 (OUDERKIRK ANDREW J [US] ET AL) 29 December 2016 (2016-12-29) * paragraph [0071]; figure 7 * ----- | 1,13 | |
| X | GB 2 579 370 A (BAE SYSTEMS PLC [GB]) 24 June 2020 (2020-06-24) * page 19, lines 32-39; figure 5 * ----- | 1,13 | |

TECHNICAL FIELDS
SEARCHED      (IPC)

G02B

The present search report has been drawn up for all claims

| Place of search | Date of completion of the search | Examiner |
|---|---|---|
| Munich | 16 December 2022 | Maria, Michaël |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 22 27 5103

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2022

| Patent document cited in search report | | Publication date | Patent family member(s) | | Publication date |
|---|---|---|---|---|---|
| US 2017329139 | A1 | 16-11-2017 | NONE | | |
| US 2016377868 | A1 | 29-12-2016 | CN | 106104353 A | 09-11-2016 |
| | | | EP | 3120170 A1 | 25-01-2017 |
| | | | EP | 3260892 A1 | 27-12-2017 |
| | | | EP | 3264145 A1 | 03-01-2018 |
| | | | JP | 6971030 B2 | 24-11-2021 |
| | | | JP | 2017510844 A | 13-04-2017 |
| | | | KR | 20160132972 A | 21-11-2016 |
| | | | TW | 201602638 A | 16-01-2016 |
| | | | US | 2016377868 A1 | 29-12-2016 |
| | | | US | 2018231786 A1 | 16-08-2018 |
| | | | US | 2019271848 A1 | 05-09-2019 |
| | | | WO | 2015142654 A1 | 24-09-2015 |
| GB 2579370 | A | 24-06-2020 | NONE | | |

EPO FORM P0459

For more details about this annex : see Official Journal of the European Patent Office, No. 12/82